# EUROPEAN PATENT APPLICATION

(11) **EP 4 195 075 A1**
(43) Date of publication of application: **14.06.2023**
(21) Application number: 22174083.0
(22) Date of filing: 18.05.2022
(51) Int. Cl.: G06F 21/10, G06F 21/16, G06F 21/64, H04L 9/00, H04L 9/40, H04W 4/70, H04W 12/106

(54) **BLOCKCHAIN-BASED DATA SHARING METHOD AND APPARATUS**

(30) Priority: 08.12.2021 KR 20210175170
(71) Applicant: Penta Security Systems, Inc., Seoul 07241 (KR)
(72) Inventor: OH, Jin Hyeok, 14247 Gwangmyeong-si, Gyeonggi-do (KR); LIM, Myong Cheol, 01755 Seoul (KR); SIM, Sang Gyoo, 06939 Seoul (KR); Duk Soo, KIM, 03747 Seoul (KR); LEE, Seok Woo, 04604 Seoul (KR)
(74) Representative: Stöckeler, Ferdinand

(57) **Abstract**

A data-sharing method, performed by a processor in a data-sharing apparatus including a blockchain ad a data subscription platform server, may comprise: registering, by the data subscription platform server, a data supply plan in the blockchain according to a request of a data supplier; registering, by the data subscription platform server, content data supplied from the data supplier; managing, by the data subscription platform server, data subscription rights of a data subscriber by using the blockchain according to a subscription request of the data subscriber; and supplying, by the data subscription platform server, the content data to the data subscriber.

## Description

### CROSS-REFERENCE TO RELATED APPLICATIONS

This application claims priority to Korean Patent Application No. 10-2021-0175170 filed on December 8, 2021, with the Korean Intellectual Property Office (KIPO), the entire contents of which are hereby incorporated by reference.

### BACKGROUND

### 1. Technical Field

Exemplary embodiments of the present disclosure relate to a method and an apparatus for data sharing, and more particularly, to a method and an apparatus for blockchain-based data sharing, which can transparently manage a procedure of supplying data by storing data in a blockchain, which occurs when registering and supplying the data.

### 2. Related Art

According to the '4th industrial revolution indicators in 2021' announced by the Ministry of Science and ICT, the total market size of data industries increased by 14.3% from 16.85 trillion won in 2019 to 19.2736 trillion won in 2020. In particular, the cumulative number of data uses for artificial intelligence (AI) learning increased by 153.4% from 38,208 in August 2020 to 96,826 in August 2021. As such, in the era of the 4th industrial revolution, the importance of data such as big data and AI is being emphasized. In the future industry, the industrial system is expected to change to a structure in which data is fused and combined to create a larger amount of data and values.

In addition, according to the 'research on the establishment of a subscription statistics platform for activating data transactions' included in the 'data research brief' published by the Statistical Research Institute, current data transactions have problems such as lack of high-quality data and unreasonable pricing, making it difficult to form a data trading market. Also, there is a large gap between a supply price and a demand price, possibility of market disturbance due to data sharing or re-supply, and difficulty in data purification, linkage, and analysis. Accordingly, in the above study, a subscription platform was proposed in which a subscriber pays a predetermined subscription fee to subscribe to data, and a provider provides high-quality data to the platform by homomorphic encryption.

The study predicted that it would be possible to contribute to the vitalization of data transactions and the leap of the data industry by providing data services so that various data can be easily accessed and used conveniently through the data subscription platform, thereby ensuring reliable data transactions.

### SUMMARY

Accordingly, exemplary embodiments of the present disclosure are provided to substantially obviate one or more problems due to limitations and disadvantages of the related art.

Exemplary embodiments of the present disclosure provide a method and an apparatus for blockchain-based data sharing, which can transparently manage data subscription contracts and subscription rights based on a blockchain.

Exemplary embodiments of the present disclosure also provide a method and an apparatus for blockchain-based data sharing, which can prevent misuse of services due to transmission and reception of forged data by verifying the integrity of the data based on a blockchain.

According to a first exemplary embodiment of the present disclosure, a data-sharing method, performed by a processor in a data-sharing apparatus including a blockchain ad a data subscription platform server, may comprise: registering, by the data subscription platform server, a data supply plan in the blockchain according to a request of a data supplier; registering, by the data subscription platform server, content data supplied from the data supplier; managing, by the data subscription platform server, data subscription rights of a data subscriber by using the blockchain according to a subscription request of the data subscriber; and supplying, by the data subscription platform server, the content data to the data subscriber.

The registering of the data supply plan may comprise: receiving, by the data subscription platform server from the data supplier, a registration request for the data supply plan; generating, by the data subscription platform server, an identifier (ID) of the data supply plan; registering, by the data subscription platform server, the data supply plan in the blockchain; and transmitting, by the data subscription platform server, a data supply plan registration completion message including the ID of the data supply plan and information on a recording position within the blockchain to the data supplier.

The data supplier and the data subscription platform server may exchange information using a data registration format.

The data registration format may include at least one of an ID of the data supplier, a digital signature of the data supplier, description on the data supply plan, the ID of the data supply plan, a category of the content data, a keyword of the content data, a generation time of the content data, a recording position within the blockchain, a hash value of the content data, or a combination thereof.

The registering of the content data may comprise: receiving, by the data subscription platform server from the data supplier, the content data and the data registration format filled with field values; registering, by the data subscription platform server, the data registration format in the blockchain; and transmitting, by the data subscription platform server to the data supplier, a data registration completion message along with the data registration format to which the recording position within the blockchain assigned by the blockchain is input.

The managing of the data subscription rights may comprise: receiving, by the data subscription platform server, a data subscription request from the data subscriber; generating, by the data subscription platform server, a data subscription rights management table; storing, by the data subscription platform server, the data subscription rights management table in the blockchain; and transmitting, by the data subscription platform server, a subscription approval message to the data subscriber.

The data subscription rights management table may be configured in a data subscription rights management format, and the data subscription rights management format may include at least one of an ID of the data supplier, an electronic signature of the data supplier, an ID of the data subscriber, an electronic signature of the data subscriber, an ID of the data supply plan, the information on the recording position within the blockchain, or a combination thereof.

The transmitting of the content data may further comprise: verifying, by the data subscription platform server, integrity of the data subscription rights management table by comparing data recorded in a transaction of the blockchain with data of the subscription rights management table; and transmitting, by the data subscription platform server, a recording position of the content data within blockchain along with the content data to the data subscriber.

The data subscriber receiving the content data may verify integrity of the content data by comparing a hash value of the content data, which is provided from the blockchain based on the recording position, with a hash value calculated based on the received content data.

According to a second exemplary embodiment of the present disclosure, a data-sharing apparatus including a blockchain ad a data subscription platform server may comprise a processor; and a memory storing one or more instructions executable by the processor, wherein when executed by the processor, the one or more instructions cause the data subscription platform server to: register a data supply plan in the blockchain according to a request of a data supplier; register content data supplied from the data supplier; manage data subscription rights of a data subscriber by using the blockchain according to a subscription request of the data subscriber; and supply the content data to the data subscriber.

In the registering of the data supply plan, the one or more instructions may further cause the data subscription platform server to: receive, from the data supplier, a registration request for the data supply plan; generate an identifier (ID) of the data supply plan; register the data supply plan in the blockchain; and transmit a data supply plan registration completion message including the ID of the data supply plan and information on a recording position within the blockchain to the data supplier.

The data supplier and the data subscription platform server may exchange information using a data registration format.

The data registration format may include at least one of an ID of the data supplier, a digital signature of the data supplier, description on the data supply plan, the ID of the data supply plan, a category of the content data, a keyword of the content data, a generation time of the content data, a recording position within the blockchain, a hash value of the content data, or a combination thereof.

In the registering of the content data, the one or more instructions may further cause the data subscription platform server to: receive, from the data supplier, the content data and the data registration format filled with field values; register the data registration format in the blockchain; and transmit, to the data supplier, a data registration completion message along with the data registration format to which the recording position within the blockchain assigned by the blockchain is input.

In the managing of the data subscription rights, the one or more instructions may further cause the data subscription platform server to: receive a data subscription request from the data subscriber; generate a data subscription rights management table; store the data subscription rights management table in the blockchain; and transmit a subscription approval message to the data subscriber.

The data subscription rights management table may be configured in a data subscription rights management format, and the data subscription rights management format may include at least one of an ID of the data supplier, an electronic signature of the data supplier, an ID of the data subscriber, an electronic signature of the data subscriber, an ID of the data supply plan, the information on the recording position within the blockchain, or a combination thereof.

In the transmitting of the content data, the one or more instructions may further cause the data subscription platform server to: verify integrity of the data subscription rights management table by comparing data recorded in a transaction of the blockchain with data of the subscription rights management table; and transmit a recording position of the content data within blockchain along with the content data to the data subscriber.

The data subscriber receiving the content data may verify integrity of the content data by comparing a hash value of the content data, which is provided from the blockchain based on the recording position, with a hash value calculated based on the received content data.

According to the present disclosure, by recording data generated during data registration and supply in a blockchain, a contractual relationship between a data supplier, a data subscriber, and a data subscription platform server as well as a process of supplying the data can be transparently managed. In addition, according to the present disclosure, a data supply format is defined so as to increase the efficiency of network traffic management. In addition, according to the present disclosure, a data subscription rights management format is defined so as to increase the efficiency of data subscription rights management, and the data can be transmitted only to subscribers who have subscribed to the data. In addition, the data transmitted during data registration and supply is recorded in the blockchain, the integrity of the data can be verified, which has the advantage of distinguishing forged data.

### BRIEF DESCRIPTION OF DRAWINGS

FIG. 1 is a conceptual diagram illustrating a data subscription model.
FIG. 2 is a block diagram illustrating a blockchain-based data sharing method and apparatus according to an exemplary embodiment of the present disclosure.
FIG. 3 is a block diagram illustrating a data subscription platform server 100 according to an exemplary embodiment of the present disclosure.
FIG. 4 is a flowchart for describing an operation of a data subscription platform server according to an exemplary embodiment of the present disclosure.
FIG. 5 is a sequence diagram for describing a blockchain-based data sharing method and apparatus according to an exemplary embodiment of the present disclosure.

### DETAILED DESCRIPTION OF THE EMBODIMENTS

Exemplary embodiments of the present disclosure are disclosed herein. However, specific structural and functional details disclosed herein are merely representative for purposes of describing exemplary embodiments of the present disclosure. Thus, exemplary embodiments of the present disclosure may be embodied in many alternate forms and should not be construed as limited to exemplary embodiments of the present disclosure set forth herein.

Accordingly, while the present disclosure is capable of various modifications and alternative forms, specific exemplary embodiments thereof are shown by way of example in the drawings and will herein be described in detail. It should be understood, however, that there is no intent to limit the present disclosure to the particular forms disclosed, but on the contrary, the present disclosure is to cover all modifications, equivalents, and alternatives falling within the spirit and scope of the present disclosure. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of the present disclosure. As used herein, the term "and/or" includes any and all combinations of one or more of the associated listed items.

In exemplary embodiments of the present disclosure, "at least one of A and B" may refer to "at least one of A or B" or "at least one of combinations of one or more of A and B". In addition, "one or more of A and B" may refer to "one or more of A or B" or "one or more of combinations of one or more of A and B".

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (i.e., "between" versus "directly between," "adjacent" versus "directly adjacent," etc.).

The terminology used herein is for the purpose of describing particular exemplary embodiments only and is not intended to be limiting of the present disclosure. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, exemplary embodiments of the present disclosure will be described in greater detail with reference to the accompanying drawings. In order to facilitate general understanding in describing the present disclosure, the same components in the drawings are denoted with the same reference signs, and repeated description thereof will be omitted.

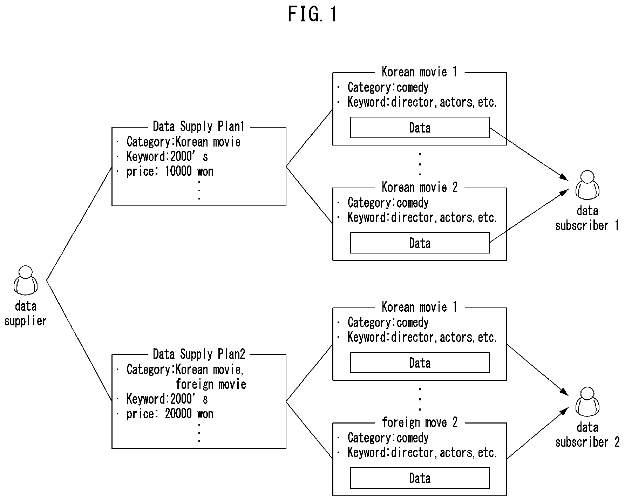

FIG. 1 is a conceptual diagram illustrating a data subscription model.

Referring to FIG. 1, the data subscription model may include one or more data suppliers supplying content data and one or more data subscribers subscribing to the content data supplied by the data suppliers. The data supplier may determine a data supply plan. The data supplier may provide one or more data supply plans, and the data supplier may supply content data according to the data supply plan. Each data subscriber may subscribe to the data supply plan of the data supplier and receive the corresponding content data.

For example, the data supplier may determine and provide a data supply plan 1 and a data supply plan 2. The data supply plan may include information such as category(ies), keyword(s), a price, and the like. For example, the data supply plan 1 may indicate 'Korean movie' as the category, '2000s' as the keyword, and '10,000 won' as the price. The data supply plan 2 may indicate 'Korean and foreign movies' as the categories, '2000s' as the keyword, and '20,000 won' as the price. The data supplier may supply content data according to the data supply plan. Each content data may include contents according to the categories and keywords. The data subscriber may subscribe by selecting the data supplier's data supply plan. The data subscriber may receive content data according to the subscribed data supply plan. For example, a data subscriber 1 subscribing to the data supply plan 1 may search for an action movie and receive content data of a Korean movie 2. On the other hand, the data subscriber 1 subscribing to the data supply plan 1 is not able to receive content data of a foreign movie 2 belonging to the data supply plan 2.

The above-described existing data subscription model has a structure in which data suppliers or a data subscription platform are managed in a closed type, so the management of data registration and supply is not transparent, and there is a problem in that there is no method for managing data subscription rights. In this reason, the present disclosure proposes a method of transparently managing contractual relationships between data suppliers, a data subscription platform server, and data subscribers through blockchain-based open-type management. In addition, by using a blockchain to verify and manage subscription rights and data integrity, it is made possible to prevent unauthorized subscribers from subscribing and to prevent forged content data from being supplied.

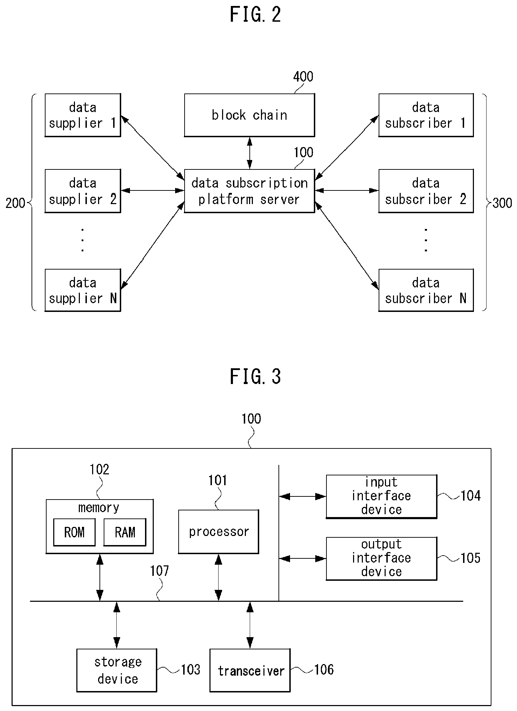

FIG. 2 is a block diagram illustrating a blockchain-based data sharing method and apparatus according to an exemplary embodiment of the present disclosure.

Referring to FIG. 2, the blockchain-based data subscription model may include a data subscription platform server 100, one or more data suppliers 200, one or more data subscribers 300, and a blockchain 400. The one or more data suppliers 200, one or more data subscribers 300, and blockchain 400 may be connected to the data subscription platform server 100 through a network such as the Internet.

Each data supplier 200 may supply content data to the data subscription platform server 100. Here, 'supplier' may be referred to as a term such as 'creator', 'publisher', 'organizer', 'editor', 'transient', 'provider', or the like. Each data supplier 200 may transmit content data to the data subscription platform server 100 by utilizing a personal computer (PC), a mobile device, an IoT device, and a data management server, but the present disclosure is not limited thereto.

Each data subscriber 300 may use content data registered in the data subscription platform server 100. Here, 'subscriber' may be referred to as a term such as 'recipient', 'subscriber', 'user', 'service user', or the like. Each data subscriber 300 may use content data by utilizing a PC, a mobile device, or a data management server.

The blockchain 400 is a network formed by connecting a plurality of nodes by wire or wirelessly. The plurality of nodes may generate metadata for various content data supplied for sharing by the data subscription platform server 100, generate a block using the generated metadata, and form the blockchain 400 by linking the generated blocks with each other. In this case, the blockchain 400 is equally distributed and stored in individual nodes constituting the blockchain 400 to ensure data integrity.

FIG. 3 is a block diagram illustrating a data subscription platform server 100 according to an exemplary embodiment of the present disclosure.

The data subscription platform server 100 may include at least one processor 101, a memory 120 for storing at least one program instruction executed by the processor 101 and a result of execution of the at least one program instruction, and a transceiver 130 performing communications with the data suppliers 200, the subscribers 300, and the blockchain 400 through wired or wireless networks. In addition, the data subscription platform server 100 may further include an input interface device 104, an output interface device 105, and a storage device 106. The respective components included in the data subscription platform server 100 may be connected by a bus 107 to communicate with each other.

The processor 101 may execute program instructions stored in the memory 102 or the storage device 106. The processor 101 may include a central processing unit (CPU), a graphics processing unit (GPU), or any other type of dedicated processor suitable for performing the method according to exemplary embodiments of the present disclosure. The memory 102 may load the program instructions stored in the storage device 106 and provide them to the processor 101 so that the processor 101 can execute the program instructions. The memory 102 may include, for example, a volatile memory, such as random access memory (RAM), and a nonvolatile memory, such as read-only memory (ROM).

The storage device 106 may be a recording medium suitable for storing the program instructions and data, for example, a magnetic medium such as a hard disk, a floppy disk, and a magnetic tape, an optical recording medium such as a compact disk read-only memory (CD-ROM) and a digital video disc (DVD), a magneto-optical medium such as a floptical disk, and a semiconductor memory such as a flash memory, an erasable programmable ROM (EPROM), or a solid-state disk (SSD) manufactured based thereon. The program instructions stored in the storage device 106 may be suitable for implementing the blockchain-based data sharing method according to the present disclosure. The data stored in the storage device 106 may include the data supply plans registered according to registration requests of the data suppliers 200, content data supplied by the data suppliers 200, information related to a subscription rights management table generated and registered according to requests of the data subscribers 300, and the like.

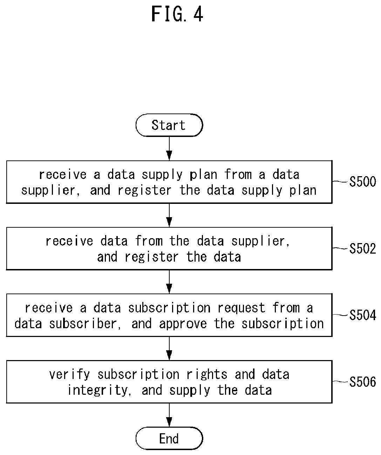

FIG. 4 is a flowchart for describing an operation of a data subscription platform server according to an exemplary embodiment of the present disclosure.

First, the data subscription platform server 100 may receive and register a data supply plan from the data supplier 200. When the data supplier 200 requests to register the data supply plan, the data subscription platform server 100 may generate a data supply plan identifier (ID) corresponding thereto, and register the data supply plan and the data supply plan ID in the blockchain 400. The data subscription platform server 100 may store the registered information and report completion of the data supply plan registration to the data supplier 200.

When the data supply plan registration is completed, the data subscription platform server 100 may receive and register content data from the data supplier 200. When the data supplier 200 supplies content data and requests registration thereof, the data subscription platform server 100 may store data in the block chain 400. The data subscription platform server 100 may register the data and report completion of the data registration to the data supplier 200.

After the content data is registered, the data subscription platform server 100 may receive a data subscription request from the data subscriber 300 and approve the subscription. When the subscription is approved, the data subscription platform server 100 may create a data subscription rights management table. The data subscription platform server 100 may register the generated data subscription rights management table in the blockchain 400 and grant the subscription approval to the data subscriber 300.

When the subscription approval is completed, the data subscription platform server 100 verifies the integrity of the data subscription rights management table, and then receive the content data stored in the blockchain 400 and deliver it to the data subscriber 300. The data subscriber 300 may subscribe to the content data after the integrity of the content data is verified.

The exemplary embodiment of the present disclosure may define and utilize a data supply format exchanged between the data subscription platform server 100 and the data supplier 200 in the process of registering the data supply plan and content data. The data supply format defined by the present disclosure may be as shown in Table 1.

**[Table 1]**

| | Fields | Description |
|---|---|---|
| Data supply format | Supplier ID | ID of data supplier |
| | Supplier signature | Digital signature of data supplier |
| | Data supply plan information | Description on data supply plan |
| | Data supply plan ID | ID of data supply plan |
| | Category(ies) | Category(ies) of data |
| | Keyword(s) | Keyword(s) of data |
| | Generation time | Generation time of data |
| | Blockchain Tx ID | Recording position within blockchain |
| | Supplied data hash | Hash value of supplied data |

The data supply format may include fields such as a supplier ID, a supplier digital signature, a data supply plan description, a data supply plan ID, category(ies), keyword(s), data generation time, recording position within the blockchain, a hash value of content data, and the like. Whether or not to use a field of the data supply format may be determined according to a purpose. Here, the data supplier 200 may receive a supplier ID thereof in advance from the data subscription platform server 100 and register a digital signature of the data supplier 200.

In addition, the data subscription platform server 100 may define and utilize a data subscription rights management format in the process of approving the data subscription and supplying the content data in order to transmit the content data to a legitimate subscriber. The data subscription rights management format may be shown in Table 2.

**[Table 2]**

| | Field | Description |
|---|---|---|
| Data subscription rights management format | Supplier ID | ID of data supplier |
| | Supplier signature | Digital signature of data supplier |
| | Subscriber ID | ID of data subscriber |
| | Subscriber signature | Digital signature of data subscriber |
| | Data supply plan ID | Data supply plan ID |
| | Blockchain Tx ID | Recording position within the block chain |

The data subscription rights management format may include fields such as a supplier ID, a supplier digital signature, a data subscriber ID, a subscriber digital signature, a data supply plan ID, a recording position within the blockchain, and the like. Whether or not to use a field of the data subscription rights management format may determine according to a purpose. Here, the data subscriber 300 may receive a subscriber ID in advance from the data subscription platform server 100 and register the digital signature of the data subscriber.

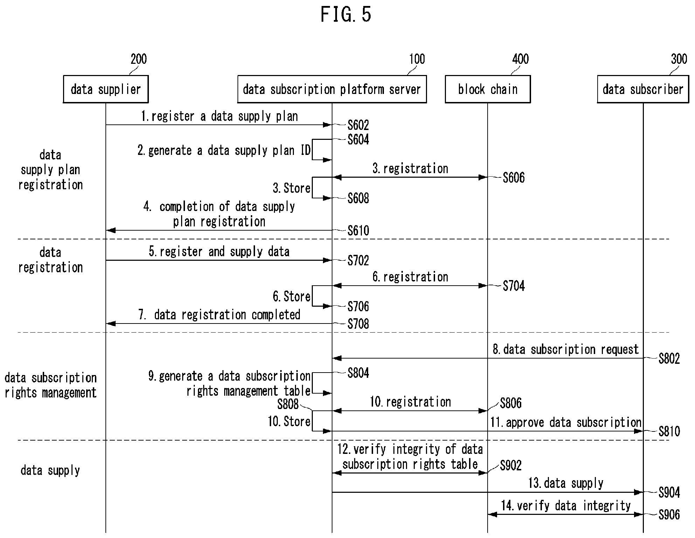

FIG. 5 is a sequence diagram for describing a blockchain-based data sharing method and apparatus according to an exemplary embodiment of the present disclosure.

Referring to FIG. 5, the data supplier 200 may request the data subscription platform server 100 to register a data supply plan (S602). In this case, the data supplier 200 may transmit a data registration format as shown in Table 3, whose fields are filled with values.

**[Table 3]**

| | Field | Description | Used or not |
|---|---|---|---|
| Data supply format | Supplier ID | ID of data supplier | O |
| | Supplier signature | Digital signature of data supplier | O |
| | Data supply plan information | Description on data supply plan | O |
| | Data supply plan ID | ID of data supply plan | X |
| | Category(ies) | Category(ies) of data | O |
| | Keyword(s) | Keyword(s) of data | O |
| | Generation time | Generation time of data | O |
| | Blockchain Tx ID | Recording position within blockchain | X |
| | Supplied data hash | Hash value of supplied data | X |

Upon receiving the data supply plan from the data supplier 200, the data subscription platform server 100 may generate a data supply plan ID therefor (S604). The data subscription platform server 100 may register the data supply plan to which the generated data supply plan ID is added in the blockchain 400 as shown in Table 4 (S606).

**[Table 4]**

| | Field | Description | Used or not |
|---|---|---|---|
| Data supply format | Supplier ID | ID of data supplier | O |
| | Supplier signature | Digital signature of data supplier | O |
| | Data supply plan information | Description on data supply plan | O |
| | Data supply plan ID | ID of data supply plan | O |
| | Category(ies) | Category(ies) of data | O |
| | Keyword(s) | Keyword(s) of data | O |
| | Generation time | Generation time of data | O |
| | Blockchain Tx ID | Recording position within blockchain | X |
| | Supplied data hash | Hash value of supplied data | X |

When the data supply plan is registered in the blockchain 400, a recording position value within the blockchain (i.e., blockchain Tx ID) may be assigned. The data subscription platform server 100 may add the recording position value within the blockchain (i.e., blockchain Tx ID) to the data supply format, and separately store the data supply format in which the recording position value (i.e., blockchain Tx ID) is added in an internal storage thereof (S608). In addition, the data subscription platform server 100 may transmit a data supply plan registration completion message to the data supplier 200 together with the data registration format in which the data supply plan ID and the recording position value within the blockchain (i.e., blockchain Tx ID) are added (S610).

The step of registering the content data may be initiated by the data supplier 200 transmitting a registration request message and the content data to the data subscription platform server 100 (S702). The data supplier 200 may transmit the content data to be supplied and the data registration format whose fields are filled with values to the data subscription platform server 100. Here, the data registration format transmitted by the data supplier 200 may be as shown in FIG. 5.

**[Table 5]**

| | Field | Description | Used or not |
|---|---|---|---|
| Data supply format | Supplier ID | ID of data supplier | O |
| | Supplier signature | Digital signature of data supplier | O |
| | Data supply plan information | Description on data supply plan | X |
| | Data supply plan ID | ID of data supply plan | O |
| | Category(ies) | Category(ies) of data | Optional |
| | Keyword(s) | Keyword(s) of data | Optional |
| | Generation time | Generation time of data | O |
| | Blockchain Tx ID | Recording position within blockchain | X |
| | Supplied data hash | Hash value of supplied data | X |

The data subscription platform server 100 may register the data supply format supplied from the data supplier 200 in the blockchain 400 (S704). When registering the data supply plan in the blockchain 400, the data supply plan stored in the blockchain 400 may be assigned a recording position value within the blockchain (i.e., blockchain Tx ID). The data subscription platform server 100 may add the recording position value within the blockchain (i.e., blockchain Tx ID) to the data supply format, and separately store the data supply format in which the recording position value (i.e., blockchain Tx ID) value is added in the internal storage thereof. On the other hand, the original content data supplied from the data supplier 200 may be stored in a separate storage of the data subscription platform server 100 together with the data supply format (S706). In addition, the data subscription platform server 100 may transmit a data registration completion message to the data supplier 200 together with the data registration format to which the recording position value (i.e., blockchain Tx ID) is added as shown in Table 6 (S708).

**[Table 6]**

| | Field | Description | Used or not |
|---|---|---|---|
| Data supply format | Supplier ID | ID of data supplier | O |
| | Supplier signature | Digital signature of data supplier | O |
| | Data supply plan information | Description on data supply plan | X |
| | Data supply plan ID | ID of data supply plan | O |
| | Category(ies) | Category(ies) of data | Optional |
| | Keyword(s) | Keyword(s) of data | Optional |
| | Generation time | Generation time of data | O |
| | Blockchain Tx ID | Recording position within blockchain | O |
| | Supplied data hash | Hash value of supplied data | O |

The data subscriber 300 may transmit a data subscription request message to the data subscription platform (S802). In this case, the subscription request message may include a data supply plan ID, a subscriber ID, and a subscriber electronic signature. The data subscription platform server 100 may generate a data subscription rights management table as shown in Table 7 by inputting the information into the fields of the data subscription rights management format of Table 2 based on the request message transmitted by the data subscriber 300 (S804).

**[Table 7]**

| | Field | Description | Used or not |
|---|---|---|---|
| Data subscription rights management format | Supplier ID | ID of data supplier | O |
| | Supplier signature | Digital signature of data supplier | O |
| | Subscriber ID | ID of data subscriber | O |
| | Subscriber signature | Digital signature of data subscriber | O |
| | Data supply plan ID | Data supply plan ID | O |
| | Blockchain Tx ID | Recording position within the block chain | X |

The data subscription platform server 100 may register the created data subscription rights management table in the blockchain 400 (S806). When the data subscription rights management table is registered in the blockchain 400, the data subscription platform server 100 may be assigned by the blockchain 400 a recording position within the blockchain (i.e., blockchain Tx ID). The data subscription platform server 100 may record the recording position within the blockchain (i.e., blockchain Tx ID) in the data subscription rights management table and separately store it in the internal storage (S808). After the storing is completed, the data subscription platform server 100 may transmit a subscription approval message to the data subscriber 300 (S708).

The data subscription platform server 100 may verify the integrity of the data subscription rights management table by using the blockchain 400 before transmitting the content data to the data subscriber 300 (S902). In order to verify the integrity of the data subscription rights management table, the data subscription platform server 100 may request data of the data subscription rights management table stored in the blockchain 400 based on the recording position (i.e., blockchain Tx ID). The blockchain 400 may transmit the data of the data subscription rights management table recorded in a transaction. The data subscription platform server 100 may verify integrity by comparing the information of the subscription rights management table with the data transmitted from the blockchain 400. When the subscription rights management table and the data of the data subscription rights management table transmitted from the blockchain 400 are the same, the data subscription platform server 100 may determine that the integrity verification of the data subscription rights management table is successful and transmits the content data (S904). In this case, the data subscription platform server 100 may transmit the content data and the recording position within the blockchain (i.e., blockchain Tx ID) together to the data subscriber 300.

The data subscriber 300 receiving the content data may verify the integrity of the content data (S906). First, the data subscriber 300 may request a hash value of the supplied content data from the blockchain 400 by using the recording position within the blockchain (i.e., blockchain Tx ID). The block chain 400 requested by the data subscriber 300 may transmit the hash value recorded in the transaction. The data subscriber 300 may compare the hash value of the content data, which is calculated based on the supplied content data, with the hash value received from the blockchain 400. When the calculated hash value of the content data and the hash value received from the blockchain 400 data are the same, the data subscriber 300 may determine that the integrity verification on the content data is successful. On the other hand, when the calculated hash value of the content data and the hash value received from the blockchain 400 data are different, the data subscriber 300 may transmit a data retransmission request message to the data subscription platform server 100.

According to the present disclosure, by recording data generated during data registration and supply in a blockchain, a contractual relationship between a data supplier, a data subscriber, and a data subscription platform server as well as a process of supplying the data can be transparently managed. In addition, according to the present disclosure, a data supply format is defined so as to increase the efficiency of network traffic management. In addition, according to the present disclosure, a data subscription rights management format is defined so as to increase the efficiency of data subscription rights management, and the data can be transmitted only to subscribers who have subscribed to the data. In addition, the data transmitted during data registration and supply is recorded in the blockchain, the integrity of the data can be verified, which has the advantage of distinguishing forged data.

The exemplary embodiments of the present disclosure may be implemented as program instructions executable by a variety of computers and recorded on a computer-readable medium. The computer-readable medium may include a program instruction, a data file, a data structure, or a combination thereof. The program instructions recorded on the computer-readable medium may be designed and configured specifically for the present disclosure or can be publicly known and available to those who are skilled in the field of computer software.

Examples of the computer-readable medium may include a hardware device such as ROM, RAM, and flash memory, which are specifically configured to store and execute the program instructions. Examples of the program instructions include machine codes made by, for example, a compiler, as well as high-level language codes executable by a computer, using an interpreter. The above exemplary hardware device can be configured to operate as at least one software module in order to perform the embodiments of the present disclosure, and vice versa.

While the exemplary embodiments of the present disclosure and their advantages have been described in detail, it should be understood that various changes, substitutions, and alterations may be made herein without departing from the scope of the present disclosure.

## Claims

1. A data-sharing method performed by a processor in a data-sharing apparatus including a blockchain ad a data subscription platform server, the data sharing method comprising:
registering, by the data subscription platform server, a data supply plan in the blockchain according to a request of a data supplier;
registering, by the data subscription platform server, content data supplied from the data supplier;
managing, by the data subscription platform server, data subscription rights of a data subscriber by using the blockchain according to a subscription request of the data subscriber; and
supplying, by the data subscription platform server, the content data to the data subscriber.

2. The data-sharing method according to claim 1, wherein the registering of the data supply plan comprises:
receiving, by the data subscription platform server from the data supplier, a registration request for the data supply plan;
generating, by the data subscription platform server, an identifier (ID) of the data supply plan;
registering, by the data subscription platform server, the data supply plan in the blockchain; and
transmitting, by the data subscription platform server, a data supply plan registration completion message including the ID of the data supply plan and information on a recording position within the blockchain to the data supplier.

3. The data-sharing method according to claim 1, wherein the data supplier and the data subscription platform server exchange information using a data registration format.

4. The data-sharing method according to claim 3, wherein the data registration format includes at least one of an ID of the data supplier, a digital signature of the data supplier, description on the data supply plan, the ID of the data supply plan, a category of the content data, a keyword of the content data, a generation time of the content data, a recording position within the blockchain, a hash value of the content data, or a combination thereof.

5. The data-sharing method according to claim 4, wherein the registering of the content data comprises:
receiving, by the data subscription platform server from the data supplier, the content data and the data registration format filled with field values;
registering, by the data subscription platform server, the data registration format in the blockchain; and
transmitting, by the data subscription platform server to the data supplier, a data registration completion message along with the data registration format to which the recording position within the blockchain assigned by the blockchain is input.

6. The data-sharing method according to claim 1, wherein the managing of the data subscription rights comprises:
receiving, by the data subscription platform server, a data subscription request from the data subscriber;
generating, by the data subscription platform server, a data subscription rights management table;
storing, by the data subscription platform server, the data subscription rights management table in the blockchain; and
transmitting, by the data subscription platform server, a subscription approval message to the data subscriber.

7. The data-sharing method according to claim 6, wherein the data subscription rights management table is configured in a data subscription rights management format, and the data subscription rights management format includes at least one of an ID of the data supplier, an electronic signature of the data supplier, an ID of the data subscriber, an electronic signature of the data subscriber, an ID of the data supply plan, the information on the recording position within the blockchain, or a combination thereof.

8. The data-sharing method according to claim 7, wherein the transmitting of the content data further comprises:
verifying, by the data subscription platform server, integrity of the data subscription rights management table by comparing data recorded in a transaction of the blockchain with data of the subscription rights management table; and
transmitting, by the data subscription platform server, a recording position of the content data within blockchain along with the content data to the data subscriber.

9. The data-sharing method according to claim 8, wherein the data subscriber receiving the content data verifies integrity of the content data by comparing a hash value of the content data, which is provided from the blockchain based on the recording position, with a hash value calculated based on the received content data.

10. A data-sharing apparatus including a blockchain ad a data subscription platform server, the data-sharing apparatus comprising:
a processor; and
a memory storing one or more instructions executable by the processor,
wherein when executed by the processor, the one or more instructions cause the data subscription platform server to:
register a data supply plan in the blockchain according to a request of a data supplier;
register content data supplied from the data supplier;
manage data subscription rights of a data subscriber by using the blockchain according to a subscription request of the data subscriber; and
supply the content data to the data subscriber.

11. The data-sharing apparatus according to claim 10, wherein in the registering of the data supply plan, the one or more instructions further cause the data subscription platform server to:
receive, from the data supplier, a registration request for the data supply plan;
generate an identifier (ID) of the data supply plan;
register the data supply plan in the blockchain; and
transmit a data supply plan registration completion message including the ID of the data supply plan and information on a recording position within the blockchain to the data supplier.

12. The data-sharing apparatus according to claim 10, wherein the data supplier and the data subscription platform server exchange information using a data registration format.

13. The data-sharing apparatus according to claim 12, wherein the data registration format includes at least one of an ID of the data supplier, a digital signature of the data supplier, description on the data supply plan, the ID of the data supply plan, a category of the content data, a keyword of the content data, a generation time of the content data, a recording position within the blockchain, a hash value of the content data, or a combination thereof.

14. The data-sharing apparatus according to claim 13, wherein in the registering of the content data, the one or more instructions further cause the data subscription platform server to:
receive, from the data supplier, the content data and the data registration format filled with field values;
register the data registration format in the blockchain; and
transmit, to the data supplier, a data registration completion message along with the data registration format to which the recording position within the blockchain assigned by the blockchain is input.

15. The data-sharing apparatus according to claim 10, wherein in the managing of the data subscription rights, the one or more instructions further cause the data subscription platform server to:
receive a data subscription request from the data subscriber;
generate a data subscription rights management table;
store the data subscription rights management table in the blockchain; and
transmit a subscription approval message to the data subscriber.

16. The data-sharing apparatus according to claim 15, wherein the data subscription rights management table is configured in a data subscription rights management format, and the data subscription rights management format includes at least one of an ID of the data supplier, an electronic signature of the data supplier, an ID of the data subscriber, an electronic signature of the data subscriber, an ID of the data supply plan, the information on the recording position within the blockchain, or a combination thereof.

17. The data-sharing apparatus according to claim 16, wherein in the transmitting of the content data, the one or more instructions further cause the data subscription platform server to:
verify integrity of the data subscription rights management table by comparing data recorded in a transaction of the blockchain with data of the subscription rights management table; and
transmit a recording position of the content data within blockchain along with the content data to the data subscriber.

18. The data-sharing apparatus according to claim 17, wherein the data subscriber receiving the content data verifies integrity of the content data by comparing a hash value of the content data, which is provided from the blockchain based on the recording position, with a hash value calculated based on the received content data.
